# EUROPÄISCHE PATENTSCHRIFT

(11) **EP 1 056 571 B1**
(45) Veröffentlichungstag und Bekanntmachung des Hinweises auf die Patenterteilung: **07.05.2003**
(21) Anmeldenummer: 99910245.2
(22) Anmeldetag: 19.02.1999
(51) Int. Cl.: B25G 3/18, B25G 3/30, B25G 3/32

(54) **SERIE VON KÜCHENGERÄTEN**
SERIES OF KITCHEN APPLIANCES
SERIE D'USTENSILES MENAGERS

(30) Priorität: 19.02.1998 DE 29802921 U
(43) Veröffentlichungstag der Anmeldung: 06.12.2000
(73) Patentinhaber: Fresen, Heinz-Willy, 50259 Pulheim (DE)
(72) Erfinder: FRESEN, Heinz-Willy, D-50259 Pulheim (DE); LUZIUS, Herbert, Georg, D-35287 Erfurtshausen (DE)
(74) Vertreter: Rox, Thomas Dr.
(86) Internationale Anmeldenummer: EP9901097
(87) Internationale Veröffentlichungsnummer: WO99042254

(56) Entgegenhaltungen:
- EP-A- 0 449 554
- DE-U- 8 813 630
- DE-U- 8 915 217
- GB-A- 2 209 301
- US-A- 5 385 420

## Beschreibung

Bei der Herstellung verschiedener Küchengeräte werden an die, in der Regel aus Metall bestehenden Oberteile Kunststoffgriffe fest angespritzt. Dabei werden verschiedene Griffarben und Grifformen verwendet.

Unter Küchengeräten bzw. Handgeräten sind u.a. Schöpflöffel, Kartoffelstampfer, Pfannenwender, Schaumlöffel, Siebe, Dekorierteile, Schälmesser und viele weitere Groß- und Kleinteile zu verstehen.

Gemeinsam ist allen Serien von derartigen Geräten, die bspw. mindestens drei verschiedene Geräte aufweisen, daß eine Mehrzahl unterschiedlicher Geräte mit denselben Griffen versehen werden. Dabei wird oftmals der Charakter der Serie durch die verwendete Grifform wesentlich mitbestimmt. Bei verschiedenen Serien mit unterschiedlichen Grifformen oder lediglich unterschiedlichen Griffarben kommt es daher zu folgenden Problemen.

Durch die große Zahl der Anbieter von Serien von Küchengeräten und die vielfältigen Farben sowie Grifformen benötigt der Handel einen enormen Platzbedarf, um mehrere Serien dem Endverbraucher anzubieten. So werden bspw. je Küchenserie mit Groß- und Kleinteilen ca. 1,2 qm pro Farbe und Form benötigt.

Durch einen Farbwechsel, diese unterliegen häufig einem Wechsel des Zeitgeschmackes, oder durch einen Wechsel der Grifform bleiben Restmengen der angebotenen Serien bei Industrie und Handel übrig, die Platz für gängigere Artikel blockieren. Diese Restmengen verursachen Kosten und drücken insgesamt die Marge, da diese Restmengen unter Einstandpreis verkauft werden müssen.

Weiter kommt es zu einem vorprogrammierten Ärger des Handels mit dem Endverbraucher, da eine vom Endverbraucher angefangene Serie durch eine Änderung der Griffarbe oder Grifform nicht mehr nachgekauft werden kann, wenn aufgrund des Platzbedarfes ausgelaufene Serien nicht mehr im Angebot sind.

Die EP-A-0 449 554 offenbart einen einzelnen ergonomisch geformten Handgriff, in den unterschiedliche Oberteile eingeschoben werden können, wobei an den Oberteilen ein spezieller Schaft vorgesehen ist.

Die DE-U 89 15 217 offenbart eine Serie von Küchengeräten mit den Merkmalen des Oberbegriffs des Anspruchs 1, 2 bzw.3,
wobei ein Küchenkleingerät, ein Greifteil und ein Funktionsteil umfasst. An das Funktionsteil ist ein Aufnahmekörper angebracht, auf den das Greifteil mit einem Presssitz aufgeschoben werden kann. Unterschiedliche Funktionsteile können so über identisch ausgebildete Anfnahmekörper mit verschiedenen Greifteilen verbunden werden.

Durch die GB-A-2 209 301 ist ein verlängerter Handgriff für Gartengeräte bekannt, an den unterschiedliche Endstücke angekoppelt werden können. Dabei ist der Anschluß an dem Endstück derart ausgebildet, daß er einerseits in das Kupplungsstück eingeführt werden kann und andererseits selbst als Griff dienen kann.

Die DE-U-88 13 630 offenbart ein Wechselsystem für Haus-und Gartengeräte, wobei unterschiedliche Endstücke an einer Handhabe lösbar befestigt werden können.

Daher liegt der vorliegenden Erfindung das technische Problem zugrunde, einen Küchengerätehandgriff für auswechselbar bzw. für nicht lösbar anzuordnende Funktionsteile bereitzustellen, so daß eine variablere Gestaltung von Serien von Küchengeräten mit unterschiedlichen, separat gefertigten Funktionsteilen und/oder unterschiedlichen, separat gefertigten Griffteilen bei geringer Lagerhaltung möglich ist.

Dieses technische Problem wird erfindungsgemäß durch eine Serie von Küchengeräten mit den Merkmalen der unabhängigen Ansprüche 1, 2 und 3 gelöst.

Erfindungsgemäß ist erkannt worden, daß bei einer Serie von Küchengeräten zum einen die durch ihre Funktion in ihrer Form vorgegebenen Oberteile in der Regel über längere Zeiträume unverändert bleiben und daß zum anderen die Handgriffe den Änderungen des Zeitgeschmackes unterlegen sind. Daher schlägt die vorliegende Erfindung vor, die Handgriffe separat von den Oberteilen herzustellen und diese erst dann zu einem ganzen Handgerät zu vereinen, wenn es als Teil einer bestimmten Serie benötigt wird. Beispielsweise kann dieses im Verkaufsraum eines Geschäftes oder bei einem Großhändler vor der Auslieferung an einen Einzelhändler der Fall sein.

Somit ist es möglich, bei einer Änderung des durch den Handgriff wesentlich mitbestimmten Aussehens der Serie von Handgeräten dieselben Oberteile mit dann veränderten Handgriffen zu versehen. Daher werden kaum noch Reste von Serien von vollständig fertiggestellten Handgeräten übrig bleiben, wenn die Form oder die Farbe des Handgriffes nicht mehr beliebt sein sollte.

Weiterhin ist es auch möglich eine Vielzahl von Serien anzubieten, ohne dafür den Raumbedarf für ein Anbieten verschiedener Serien zu vergröβern. Denn aufgrund der Variabilität, daß die Handgriffe bspw. erst beim Verkauf mit den Oberteilen verbunden werden, können durch eine Mehrzahl verschiedener Handgriffsorten und einer Mehrzahl von Oberteilen eine enorme Vielzahl an Serien angeboten werden. Der Kunde kann sich somit auch ausgefallene Serien vor Ort ähnlich einem Baukastensystem selber zusammenstellen.

Beispielsweise kann auf einem Minimum an Platz, ca. 2,2 qm Wand und ca. 1 qm Bodenfläche, ein Angebot bis zu 40 farblich und formmäßig verschiedenen Griffen für ca. 50 verschiedene Metalloberteile angeboten werden. Der Raumbedarf in dem Verkaufsraum ist somit nicht größer als bisher, jedoch ist die Vielzahl an möglichen Serien enorm vergrößert.

Wenn überhaupt, fallen nicht mehr verkäufliche Restmengen nur bei den Griffen und in ganz geringen Mengen an. Dadurch ergibt sich eine Senkung der Lagerkosten, auch für Restmengen, sowohl bei der Industrie als auch beim Handel. Darüber hinaus ergibt sich eine Kostenersparnis durch den Wegfall des Verkaufes von Restmengen unter dem Einstandspreis.

Weiterhin ergibt sich weniger Ärger mit dem Kunden und damit eine wesentlich höhere Endverbraucherzufriedenheit, da der Endverbraucher Grifformen und Griffarben über viele Jahre nachkaufen kann.

Zusätzlich ist die erfindungsgemäße Serie umweltfreundlich, da bei einem defektem Griff oder einem defekten Oberteil diese Teile passend zur vorhandenen Serie einzelnd erneuert werden können. Der Endverbraucher kann somit ein für die bisherige Serie passendes Ersatzteil kaufen, auch wenn die Industrie bereits die Handgrifformen und -farben verändert haben sollte.

Das Verbindungselement kann nun in verschiedenen Formen ausgestaltet sein. Es wird daher hervorgehoben, daß die Erfindung nicht auf eine besondere Art der Verbindung zwischen dem Handgriff und dem Oberteil beschränkt ist. So ist die Ausgestaltung des Verbindungselementes bspw. als Schraubgewindeverschluß, als Bajonetteverschluß oder als Steckverbindung möglich.

Bei einer ersten Ausführungsform der Erfindung ist das Verbindungselement derart ausgestaltet, daß die Verbindung zwischen dem Handgriff und dem Oberteil lösbar ausgebildet ist. Somit ist ein Auswechseln des Handgriffes, bspw. aufgrund einer Reparatur möglich.

Das Verbindungselement ist bei einer weiteren Ausführungsform der Erfindung an der Angel des Oberteils, also dem distalen Ende des Oberteils befestigt und weist zwei Schichten auf, die vorzugsweise durch Spritzguß hergestellt sind. Die innere Schicht ist formschlüssig mit der Angel verbunden, während die zweite, äußere Schicht mit der inneren Schicht verbunden ist und eine für eine Befestigung mit dem Handgriff ausgebildetete äußere Form aufweist. Die zweischichtige Ausgestaltung des erfindungsgemäßen Verbindungselementes an der Angel des Oberteils führt dazu, daß die Verbindungselemente verschiedener Oberteile mit nahezu identischen Abmessungen herstellbar sind. Denn bedingt durch verschiedene Formen der Angeln unterschiedlicher Oberteile treten unterschiedlich starke Schrumpfungen der ersten Schicht nach dem Spritzgießen auf, die durch das Anbringen der zweiten, äußeren Schicht ausgeglichen werden können. Es wird somit eine äußere Form gewährleistet, die unabhängig von der Form der verwendeten Angel ist.

Bei einer weiteren bevorzugten Ausgestaltung des Verbindungselementes, das an der Angel des Oberteils befestigt ist, weist das Verbindungselement an dem dem Oberteil zugewandten Ende ein Anschlagelement und ein Rastelement auf. Im zusammengebauten Zustand liegt das Anschlagelement am offenen Ende des Handgriffs an und das Rastelement steht mit einer umlaufenden Nut in Eingriff, die innerhalb des Handgriffes benachbart zum offenen Ende ausgebildet ist. Durch das Zusammenwirken des Anschlagelementes und des Rastelementes wird ein sicherer und fester Sitz des Oberteils im Handgriff gewährleistet. Jedoch ist der Abstand zwischen dem Anschlagelement und dem Rastelement gering, da beide im Bereich des offenen Endes des Handgriffes mit diesem in Eingriff stehen. Daher sind eventuell bei der Herstellung durch Schrumpfung des gespritzten Kunststoffmaterials auftretende Längenunterschiede des gesamten Verbindungselementes zu vernachlässigen. In diesem Fall ist also die zuvor beschriebene zweischichtige Ausgestaltung des Verbindungselementes nicht erforderlich, um verschiedene durch unterschiedliche Ausbildungen der Angeln der Oberteile bedingte Längenunterschiede auszugleichen.

Durch beide zuvor beschriebenen besonderen Ausgestaltungen des Verbindungselementes wird gewährleistet, daß unabhängig von dem verwendeten Oberteil sämtliche Handgriffe zuverlässig und sicher mit diesen verbunden werden können.

Im folgenden wird die Erfindung anhand verschiedener Ausführungsbeispiele näher erläutert. In der Zeichnung zeigt
- Fig. 1: im Querschnitt ein erstes Handgerät einer erfindungsgemäßen Serie von Handgeräten mit einem Verbindungselement in Form einer Schraubverbindung,
- Fig. 2.: im Querschnitt ein zweites Handgerät einer erfindungsgemäßen Serie von Handgeräten mit einem Verbindungselement in Form einer Steck-Schraubverbindung,
- Fig. 3: im Querschnitt ein drittes Handgerät einer erfindungsgemäßen Serie von Handgeräten mit einem Verbindungselement in Form einer Rastverbindung,
- Fig. 4: im Querschnitt ein viertes Handgerät einer erfindungsgemäßen Serie von Handgeräten mit einem zweischichtig ausgebildeten Verbindungselement mit Rastelement,
- Fig. 5: im Querschnitt ein fünftes Handgerät einer erfindungsgemäßen Serie von Handgeräten mit einem Verbindungselement in Form einer Rastverbindung und
- Fig. 6: im Querschnitt ein sechstes Handgerät einer erfindungsgemäßen Serie von Handgeräten mit einem Verbindungselement in Form einer Rastverbindung.

Das Handgerät der erfindungsgemäßen Serie von Handgeräten weist ein Oberteil 1 auf, das in der Zeichnung nur schematisch mit einer Angel 1' dargestellt ist. Das Oberteil 1 ist in seiner Form, Oberfläche und Farbe je nach seiner Funktion und seiner Anwendung entsprechend ausgestaltet.

Weiterhin weist das Handgerät einen Handgriff 2 auf, der je nach Ausführungsbeispiel unterschiedlich ist.

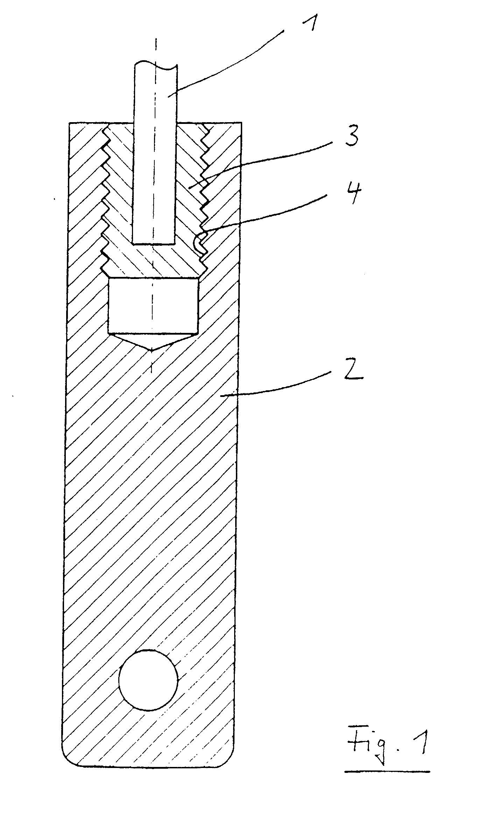

In Fig. 1 ist das Verbindungselement als eine Schraubverbindung dargestellt, bei der ein mit der Angel 1' des Oberteils 1 verbundenes Gewindeelement 3 über ein Außengewinde mit einem Innengewinde 4 verbunden ist, das in dem Handgriff 2 ausgebildet ist.

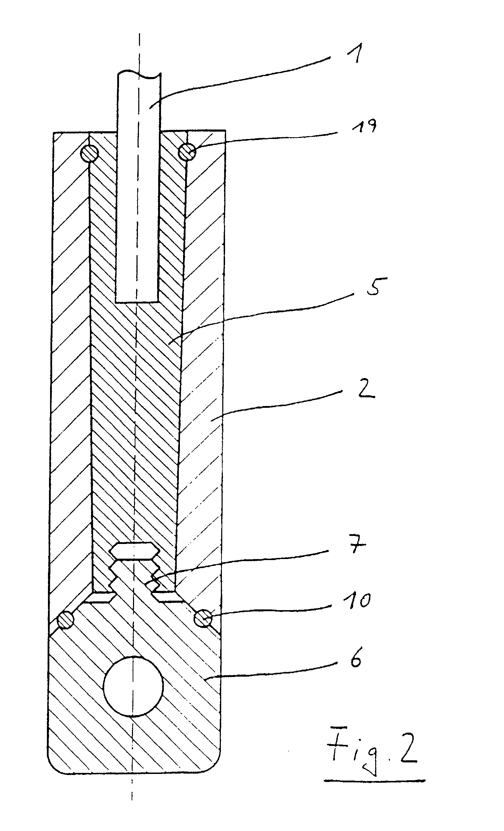

In Fig. 2 ist das Verbindungselement als eine Steck-Schraubverbindung dargestellt, bei der die Angel 1' des Oberteils 1 mit einem konisch ausgebildeten Steckelement 5 versehen ist, das an einer entsprechend konisch ausgestalteten Innenfläche des Handgriffes 2 anliegt. Ein Endstück 6 ist über ein Gewindeelement 7 mit dem Steckelement 5 verbunden und fixiert dieses.

Beide in den Fig. 1 und 2 dargestellten Ausführungsbeispiele weisen die Gemeinsamkeit auf, daß die Verbindung zwischen dem Oberteil und dem Handgriff lösbar ist.

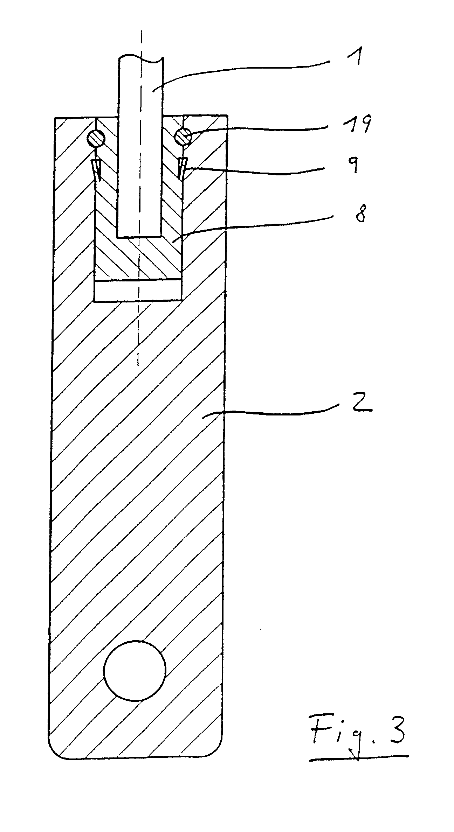

Wie in den Fig. 2 und 3 dargestellt ist, weist die Verbindung zwischen der Angel 1' des Oberteils 1 und dem Handgriff 2 an geeigneten Stellen Dichtungen 19 auf, die den Innenbereich des Handgriffes 2 vor eindringender Feuchtigkeit und Schmutz schützen. Somit wird eine lange Benutzungsdauer gewährleistet.

In den Fig. 3 bis 6 sind dagegen einmal herzustellende Verbindungen zwischen den Oberteilen 1 und den Handgriffen 2 dargestellt, die nicht lösbar sind. Dazu ist gemäß Fig. 3 die Angel 1' des Oberteils 1 mit einem Verbindungselement in Form eines Rastelements 8 verbunden, das vorstehende Rastnasen 9 aufweist. Die Rastnasen 9 gelangen beim Einschieben der Angel 1' Oberteils 1 in den Handgriff 2 mit an der Innenseite des Handgriffes 2 ausgebildeten Vertiefungen in Eingriff und verrasten somit. Eine dauerhafte Verbindung zwischen dem Oberteil 1 und dem Handgriff 2 wird somit erzielt.

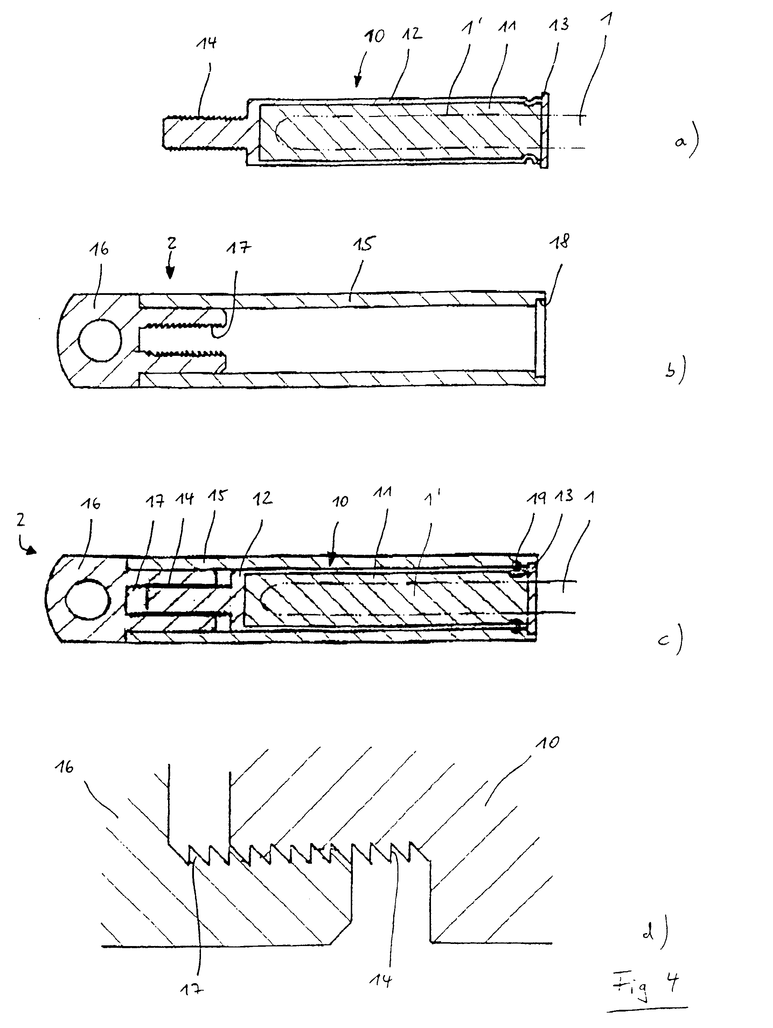

In den Fign. 4a bis d ist ein viertes Ausführungsbeispiel eines Handgerätes einer erfindungsgemäßen Serie von Handgeräten dargestellt. Fig. 4a zeigt das mit der Angel 1' eines Oberteils 1 verbundene Verbindungselement 10, das aus einer inneren Schicht 11 und einer äußeren Schicht 12 besteht. Beide Schichten 11 und 12 sind durch Spritzguß aus einem Kunststoffmaterial hergestellt. Die innere Schicht 11 ist formschlüssig mit der Angel 1' verbunden, wobei während der Herstellung in Abhängigkeit von der Form der Angel 1' unterschiedlich starke Schrumpfungen der inneren Schicht 11 auftreten können. Daher ist äußere Schicht 12 zusätzlich auf die innere Schicht 11 durch Spritzguß aufgebracht, wobei die äußere Schicht 12 mit der inneren Schicht 11 verbunden ist und eine für eine Befestigung mit dem Handgriff 2 ausgebildete äußere Form aufweist. Dazu ist am dem Oberteil 1 zugewandten Ende der äußeren Schicht 12 ein Anschlagelement in Form eines Flansches 13 ausgebildet. Am distalen Ende der äußeren Schicht 12 ist dagegen eine Rasterung 14 vorgesehen.

Fig. 4b zeigt den Handgriff 2, der aus einer Hülse 15 und einem Endstück 16 besteht. Das Endstück 16 weist ein in das Innere der Hülse 15 hineinragende innere Rasterung 17 auf, die an die Rasterung 14 des Verbindungselementes 10 angepaßt ist.

Fig. 4c zeigt das Handgerät im montierten Zustand, wobei die Angel 1' des Oberteils 1 mit dem Verbindungselement 10 von der offenen Seite der Hülse 15 her in den Handgriff 2 eingeschoben ist. Dabei liegt der Flansch 13 an einer am offenen Ende der Hülse 15 ausgebildeten Vertiefung 18 an, während die am distalen Ende des Verbindungselementes ausgebildete Rasterung 14 mit der im Endstück 16 ausgebildeten Rasterung 17 in Eingriff steht. Weiterhin ist eine Ringdichtung 19 vorgesehen, um das Eindringen von Wasser in den Innenbereich des Handgriffes 2 zu verhindern.

Fig. 4d zeigt weiterhin das Eingreifen der beiden Rasterungen 14 und 17 miteinander im Detail. Die Rasterungen weisen jeweils abwechselnd schräg und senkrecht zur Achse der Angel 1' verlaufende Anlageflächen auf, die beim Zusammenfügen des Handgerätes einrasten und ein Lösen des Oberteils 1 vom Handgriff 2 verhindern.

Dadurch, daß das Verbindungselement zweischichtig ausgebildet ist und somit eine äußere Form aufweist, die unabhängig von der Ausbildung der Angel 1' ist, wird in zuverlässiger Weise gewährleistet, daß auch unterschiedliche Oberteile in zuverlässiger Weise mit den jeweils identisch ausgebildeten Handgriffen verbunden werden können. Die bei der Herstellung des Verbindungselementes 10 auftretenden Schrumpfungen des Kunststoffmaterials führen also nicht zu einer Beeinträchtigung der Zuverlässigkeit der Handgeräte.

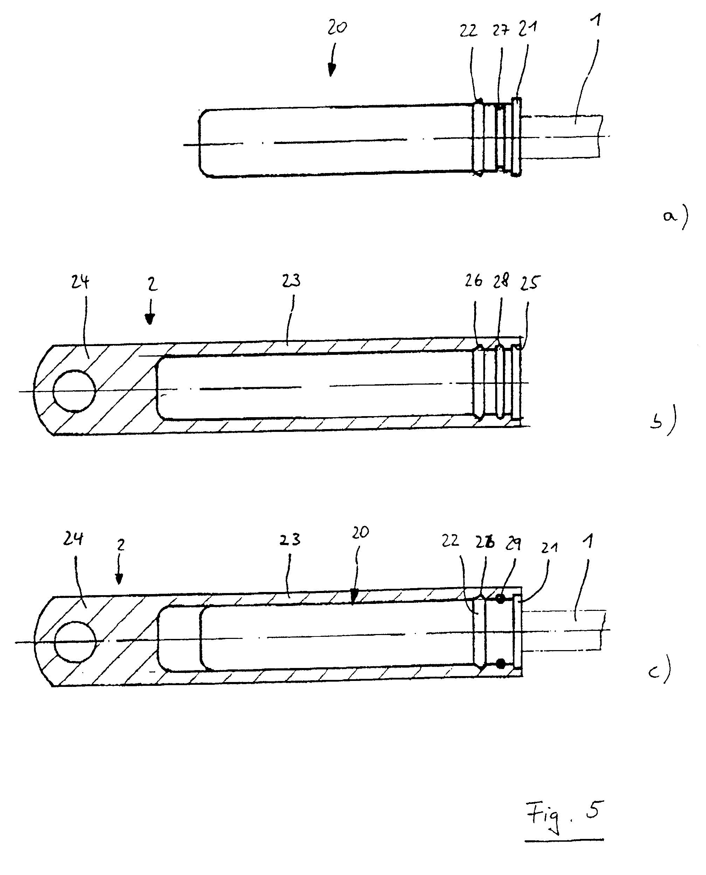

In Fig. 5 ist ein fünftes Ausführungsbeispiel eines Handgerätes einer erfindungsgemäßen Serie von Handgeräten dargestellt. Fig. 5a zeigt das mit der Angel 1' des Oberteils 1 verbundene Verbindungselement 20, das ebenfalls durch Spritzguß aus Kunststoff hergestellt ist. An dem dem Oberteil 1 zugewandten Ende des Verbindungelementes 20 sind ein als Flansch 21 ausgebildetes Anschlagelement und ein Rastelement 22 ausgebildet.

Fig. 5b zeigt den Handgriff 2, der einstückig mit einer Hülse 23 und einem Endstück 24 ausgebildet ist. Im Bereich des offenen Endes der Hülse 23 ist eine umlaufende Vertiefung 25 sowie eine umlaufende Nut 26 vorgesehen, deren Abstand mit dem zwischen dem Flansch 21 und dem Rastelement 22 übereinstimmt.

Fig. 5c zeigt das Handgerät im zusammengebauten Zustand. Dabei liegt der Flansch 21 an der Vertiefung 25 an, während das Rastelement 22 mit der Nut 26 in Eingriff steht. In dieser Weise wird das Verbindungselement 20 in der Hülse 23 durch die mit geringem Abstand zueinander ausgebildeten Elemente, nämlich Flansch 21 und Rastelement 22, in einer fest vorgegebenen Position fixiert. Das sich über das Rastelement 22 hinaus erstreckende distale Ende des Verbindungselementes erstreckt sich weiterhin innerhalb der Hülse 23, wobei es nicht auf die exakte Länge dieses distalen Endes ankommt. Daher wird durch die besondere Ausgestaltung des geringen Abstandes zwischen dem Flansch 21 und dem Rastelement 22 in zuverlässiger Weise verhindert, daß sich unterschiedliche Schrumpfungen des auf die Angel 1' aufgespritzten Verbindungselementes 20 negativ auf die zuverlässige Fixierung des Verbindungselementes 20 in der Hülse 23 des Handgriffes 2 auswirken. Wie Fig. 5c weiterhin zeigt, ist auch bei diesem Ausführungsbeispiel ein Dichtungsring 29 vorgesehen, der in entsprechend ausgebildeten Nuten 27 und 28 angeordnet ist.

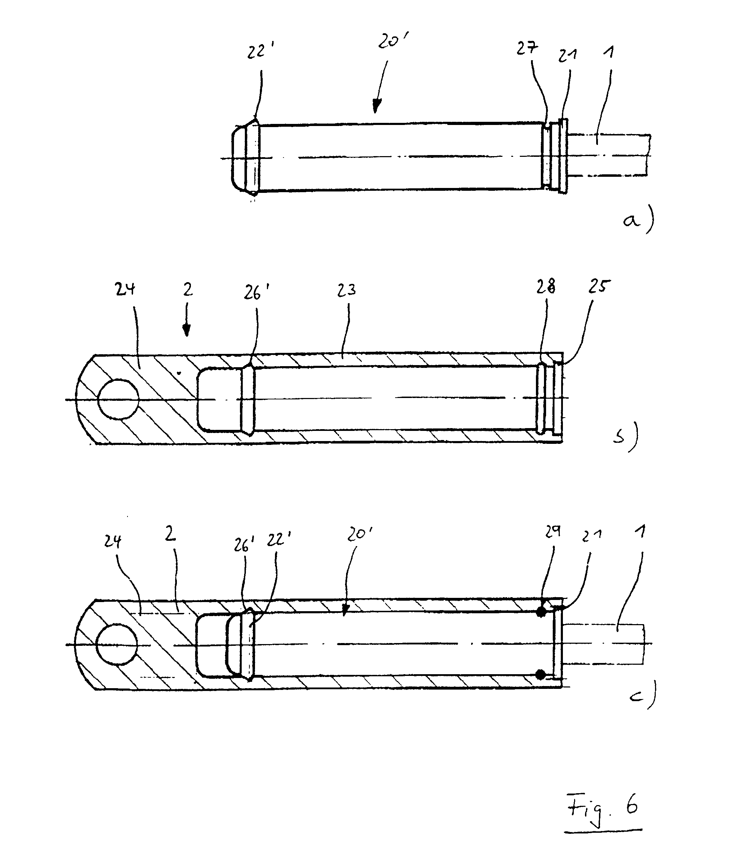

Schließlich zeigt Fig. 6 ein sechstes Ausführungsbeispiel eines Handgerätes einer erfindungsgemäßen Serie von Handgeräten, wobei sich der Aufbau des Verbindungselementes 20' und des Handgriffes 2 gegenüber dem in Fig. 5 dargestellten Ausführungsbeispiel nur durch die Position des Rastelementes 22' unterscheidet. Bei dem in Fig. 6 dargestellten Ausführungsbeispiel ist das Rastelement 22' am distalen Ende des Verbindungselementes 20 ausgebildet und die Nut 26' ist an entsprechender Stelle innerhalb der Hülse 23 ausgebildet. Da der Abstand zwischen dem Rastelement 22' und dem Flansch 21 gegenüber dem Ausführungsbeispiel gemäß Fig. 5 erheblich größer ist, ergibt sich eine weiter verbesserte Fixierung des Verbindungselementes 20' innerhalb des Handgriffes 2. Da das Verbindungselement 20' entsprechend dem vierten Ausführungsbeispiel (Fig. 4) aus zwei Schichten besteht, wirkt sich größere Abstand zwischen dem Flansch 21 und dem Rastelement 22' nicht negativ auf die Zuverlässigkeit der Verbindung zwischen Oberteil 1 und dem Handgriff 2 aus. Auch das sechste Ausführungsbeispiel gewährleistet somit in zuverlässiger Weise, daß verschiedene Oberteile mit identisch ausgebildeten Handgriffen versehen werden können, um erfindungsgemäß eine Serie von Handgeräten zu bilden.

Sämtlichen in den Fign. 4 bis 6 dargestellten Ausführungsbeispielen ist gemeinsam, daß der sich in die Hülse 15 bzw. 23 erstreckende zylindrische Abschnitt des Verbindungselementes 10 bzw. 20 einen Außendurchmesser aufweist, der an den Innendurchmesser der Hülse 15 bzw. 23 angepaßt ist. Dadurch wird die Stabilität der Befestigung des Verbindungselementes 15 bzw. 23 weiter verbessert, ein seitliches Verkanten wird zusätzlich zur axialen Sicherung weitgehend verhindert.

## Patentansprüche

1. Serie von Küchengeräten
- wobei jedes Küchengerät ein Oberteil (1) und einen separaten Handgriff (2) aufweist, der über ein Verbindungselement mit dem Oberteil (1) verbunden werden kann,
- mit mindestens drei unterschiedlichen Oberteilen (1), und
- mit Handgriffen (2), die mit jedem Oberteil (1) verbunden werden können,
- wobei mindestens zwei verschiedene Sorten von Handgriffen (2) vorgesehen sind, die in ihrer äußeren Gestaltung verschieden sind,
**dadurch gekennzeichnet,**
- daß jedes Oberteil je nach Bedarf über ein Verbindungselement identischer oder unterschiedlicher Gestaltung mit der jeweiligen Handgriffsorte verbunden werden kann, wobei die Handgriffsorte jeweils den Charakter der Serie von Küchengeräten mitbestimmt,
- daß das Verbindungselement eine Schraubgewindeverschluß, ein Bajonetteverschluß, eine Steckverbindung oder ähnliches ist und
- daß die Handgriffe (2) lösbar mit den Oberteilen (1) verbunden sind.

2. Serie von Küchengeräten
- wobei jedes Küchengerät ein Oberteil (1) und einen separaten Handgriff (2) aufweist, der über ein Verbindungselement mit dem Oberteil (1) verbunden werden kann,
- mit mindestens drei unterschiedlichen Oberteilen (1), und
- mit Handgriffen (2), die mit jedem Oberteil (1) verbunden werden können,
- wobei mindestens zwei verschiedene Sorten von Handgriffen (2) vorgesehen sind, die in ihrer äußeren Gestaltung verschieden sind, und
- wobei die Handgriffe (2) fest mit den Oberteilen (1) verbunden sind,
**dadurch gekennzeichnet,**
- daß jedes oberteil je nach Bedarf über ein Verbindungselement identischer oder unterschiedlicher Gestattung mit der jeweiligen Handgriffsorte verbunden, werden kann, wobei die Handgriffsorte jeweils den Charekter der Serie von Küchengeräten mitbestimmt,
- daß jedes Oberteil (1) mit einem Verbindungselement in Form eines Rastelementes (8) verbunden ist, das vorstehende Rastnasen (9) aufweist, die mit an der Innenseite des Handgriffes (2) ausgebildeten Vertiefungen in Eingriff stehen.

3. Serie von Küchengeräten
- wobei jedes Küchengerät ein Oberteil (1) und einen separaten Handgriff (2) aufweist, der über ein Verbindungselement mit dem Oberteil (1) verbunden werden kann,
- mit mindestens drei unterschiedlichen Oberteilen (1), und
- mit Handgriffen (2), die mit jedem Oberteil (1) verbunden werden können,
- wobei mindestens zwei verschiedene Sorten von Handgriffen (2) vorgesehen sind, die in ihrer äußeren Gestaltung verschieden sind, und
- wobei die Handgriffe (2) fest mit den Oberteilen (1) verbunden sind,
**dadurch gekennzeichnet,**
- daß jedes Oberteil je nach Bedarf über ein Verbindungselement identischer oder unterschiedlicher Gestaltung mit der jeweiligen Handgriffsorte Verbunden werden kann, wobei die Handgriffsorte jweils den character der Serie von küchengeräten mitbestimmt,
- daß die Angel (1') des Oberteils (1) zwei Schichten (11, 12) aufweist, die das zweischichtige Verbindungselement bilden und vorzugsweise durch Spritzgießen hergestellt sind, wobei die innere Schicht (11) formschlüssig mit der Angel (1') verbunden ist und wobei die äußere Schicht (12) mit der inneren Schicht (11) verbunden ist und eine für eine Befestigung mit dem Handgriff (2) ausgebildete äußere Form aufweist, und
- daß das verbindungselement als Rastelement (14, 22, 22') ausgebildet ist.

4. Serie von Küchengeräten nach der Anspruch 3, **dadurch gekennzeichnet, daß** das Verbindungselement (20) mit der Angel (1') des Oberteils (1) verbunden ist, daß das Verbindunaselement (20) am dem dem Oberteil (1) zugewandten Ende ein Anschlagelement (21) und ein Rastelement (22) aufweist, wobei das Anschlagelement (21) am offenen Ende des Handgriffes (2) anliegt und wobei das Rastelement (22) mit einer umlaufenden Nut (26) in Eingriff steht, die innerhalb des Handgriffes (2) benachbart zum offenen Ende ausgebildet ist.

## Claims

1. A set of kitchen utensils
- where each kitchen utensil has an upper part (1) and a separate handle (2) which may be joined to the upper part (1) by way of a joining element,
- having at least three different upper parts (1), and
- having handles (2) which may be joined to each upper part (1),
- where at least two different types of handle (2) are provided which differ in their external shape,
**characterised**
- **in that** each upper part may, as required, be joined by way of a joining element of identical or different shape to the respective handle type, with the handle type in each case also determining the character of the set of kitchen utensils,
- **in that** the joining element is a screw-thread connection, a bayonet connection, a push-in connection or similar, and
- **in that** the handles (2) are detachably joined to the upper parts (1).

2. A set of kitchen utensils
- where each kitchen utensil has an upper part (1) and a separate handle (2) which may be joined to the upper part (1) by way of a joining element,
- having at least three different upper parts (1), and
- having handles (2) which may be joined to each upper part (1),
- where at least two different types of handle (2) are provided which differ in their external shape, and
- where the handles (2) are fixedly joined to the upper parts (1),
**characterised**
- **in that** each upper part may, as required, be joined by way of a joining element of identical or different shape to the respective handle type, with the handle type in each case also determining the character of the set of kitchen utensils,
- **in that** each upper part (1) is joined to a joining element in the form of a latching element (8) which has projecting latching lugs (9) which are in engagement with depressions formed on the inside of the handle (2).

3. A set of kitchen utensils
- where each kitchen utensil has an upper part (1) and a separate handle (2) which may be joined to the upper part (1) by way of a joining element,
- having at least three different upper parts (1), and
- having handles (2) which may be joined to each upper part (1),
- where at least two different types of handle (2) are provided which differ in their external shape, and
- where the handles (2) are fixedly joined to the upper parts (1),
**characterised**
- **in that** each upper part may, as required, be joined by way of a joining element of identical or different shape to the respective handle type, with the handle type in each case also determining the character of the set of kitchen utensils,
- **in that** the handle-end extension (1') of the upper part (1) has two layers (11, 12) which form the two-layer joining element and are preferably made by injection moulding, with the inner layer (11) being form-fittingly joined to the handle-end extension (1') and with the outer layer (12) being joined to the inner layer (11) and having an external form constructed for the purpose of securing it to the handle (2), and
- **in that** the joining element is constructed as a latching element (14, 22, 22').

4. A set of kitchen utensils according to Claim 3, **characterised in that** the joining element (20) is joined to the handle-end extension (1') of the upper part (1), **in that** the joining element (20) has at the end facing the upper part (1) an abutment element (21) and a latching element (22), with the abutment element (21) lying at the open end of the handle (2) and with the latching element (22) being in engagement with a peripheral groove (26) which is constructed inside the handle (2) and adjacent to the open end.

## Revendications

1. Série d'ustensiles de cuisine, dans laquelle chaque ustensile de cuisine comporte une partie supérieure (1) et un manche (2) séparé, qui peut être assemblé par l'intermédiaire d'un élément d'assemblage avec la partie supérieure (1), comprenant au moins trois parties supérieures (1) différentes et comprenant des manches (2), qui peuvent être assemblés à chaque partie supérieure (1), sachant qu'il est prévu au moins deux sortes différentes de manches (2), qui sont différents par leur conception extérieure, **caractérisée en ce que** chaque partie supérieure, en fonction des besoins, peut être assemblée à chaque sorte de manche par l'intermédiaire d'un élément d'assemblage de conception identique ou différente, le caractère de la série d'ustensiles de cuisine étant défini entre autres par chaque sorte de manche, **en ce que** l'élément d'assemblage est un raccord fileté, un raccord à baïonnette, un raccord à enficher ou un élément similaire, et **en ce que** les manches (2) sont assemblés de manière amovible avec les parties supérieures (1).

2. Série d'ustensiles de cuisine, dans laquelle chaque ustensile de cuisine comporte une partie supérieure (1) et un manche (2) séparé, qui peut être assemblé par l'intermédiaire d'un élément d'assemblage avec la partie supérieure (1), comprenant au moins trois parties supérieures (1) différentes et comprenant des manches (2), qui peuvent être assemblés à chaque partie supérieure (1), sachant qu'il est prévu au moins deux sortes différentes de manches (2), qui sont différents par leur conception extérieure, et les manches (2) étant assemblés de manière fixe avec les parties supérieures (1), **caractérisée en ce que** chaque partie supérieure, en fonction des besoins, peut être assemblée à chaque sorte de manche par l'intermédiaire d'un élément d'assemblage de conception identique ou différente, le caractère de la série d'ustensiles de cuisine étant défini entre autres par chaque sorte de manche, **en ce que** chaque partie supérieure (1) est assemblée à un élément d'assemblage formé par un élément d'encliquetage (8), qui est muni de taquets d'arrêt (9), qui entrent en prise dans des évidements réalisés sur la face intérieure du manche (2).

3. Série d'ustensiles de cuisine, dans laquelle chaque ustensile de cuisine comporte une partie supérieure (1) et un manche (2) séparé, qui peut être assemblé par l'intermédiaire d'un élément d'assemblage avec la partie supérieure (1), comprenant au moins trois parties supérieures (1) différentes et comprenant des manches (2), qui peuvent être assemblés à chaque partie supérieure (1), sachant qu'il est prévu au moins deux sortes différentes de manches (2), qui sont différents par leur conception extérieure, les manches (2) étant assemblés de manière fixe avec les parties supérieures (1), **caractérisée en ce que** chaque partie supérieure, en fonction des besoins, peut être assemblée à chaque sorte de manche par l'intermédiaire d'un élément d'assemblage de conception identique ou différente, le caractère de la série d'ustensiles de cuisine étant défini entre autres par chaque sorte de manche, **en ce que** le talon (1') de la partie supérieure (1) comporte deux couches (11, 12) qui forment l'élément d'assemblage à deux couches et qui sont réalisées de préférence par moulage par injection, la couche intérieure (11) étant assemblée par conjugaison de forme avec le talon (1') et la couche extérieure (12) étant assemblée à la couche intérieure (11) et comportant une forme extérieure réalisée pour une fixation avec le manche (2), et **en ce que** l'élément d'assemblage est conçu sous forme d'élément d'encliquetage (14, 22, 22').

4. Série d'ustensiles de cuisine selon la revendication 3, **caractérisée en ce que** l'élément d'assemblage (20) est assemblé avec le talon (1') de la partie supérieure (1), **en ce que** l'élément d'assemblage (20), sur son extrémité orientée vers la partie supérieure (1), comporte un élément de butée (21) et un élément d'encliquetage (22), l'élément de butée (21) étant en appui contre l'extrémité ouverte du manche (2) et l'élément de blocage (22) étant en prise dans une rainure (26) périphérique, qui est réalisée à l'intérieur du manche (2) à proximité de l'extrémité ouverte.
